# EUROPEAN PATENT APPLICATION

(11) **EP 4 848 179 A1**
(43) Date of publication of application: **02.12.2026**
(21) Application number: 25226049.2
(22) Date of filing: 19.12.2025
(51) Int. Cl.: G06Q 10/10, G06F 40/186, G06N 20/00

(54) **INFORMATION PROCESSING SYSTEM, INFORMATION PROCESSING PROGRAM, AND INFORMATION PROCESSING METHOD**

(30) Priority: 28.05.2025 JP 2025088903
(71) Applicant: Fujifilm Business Innovation Corp., Tokyo 107-0052 (JP)
(72) Inventor: MIZUSAKI, Yutaro, Yokohama (JP)
(74) Representative: Meissner Bolte Partnerschaft mbB

(57) **Abstract**

There is provided an information processing system and a method for generating a procedure involving one or more multi-function printers. The method include acquiring reference data including target-specific information for a target organization and a skeleton procedure representing a template prepared in advance, the target-specific information including usage history of the one or more multifunction printers, inputting the target-specific information and the skeleton script into a machine learning model, and performing an inference process by the machine learning model based on the target-specific information and the skeleton procedure and generate a document comprising a customized procedure for the target organization for use of the one or more multi-function printers.

## Description

### BACKGROUND OF THE INVENTION

### (i) Field of the Invention

The present disclosure relates to an information processing system, an information processing program, and an information processing method.

### (ii) Description of Related Art

In a related art technique, artificial intelligence (AI) is used to analyze financial information and performance information of a company to create proposal materials based on an analysis result. For example, JP2025-47480A discloses an AI system that provides a one-stop solution from formulation to execution of sales strategies including company analysis functions, financial estimation and document generation functions, and new customer acquisition functions. In this case, a person receiving the proposal materials from the AI may not have a clear idea of a specific approach they should take using those materials. In such a case, it is not possible to accurately and efficiently implement the proposal materials.

### SUMMARY OF THE INVENTION

It is considered that artificial intelligence (AI) analyzes financial information and performance information of a company and automatically creates proposal materials based on an analysis result. In this case, sales personnel who have received the proposal materials from the AI may not have a clear idea of a specific approach they should take using those materials. In such a case, it is not possible to support sales activities to be efficient.

Therefore, an object of the present disclosure is to provide an information processing system, an information processing program, and an information processing method capable of generating a script for a scenario involving a target organization. For example, the method may include generating a script for a sales scenario for efficiently supporting sales by taking into account information specific to a target customer.

In order to achieve the above object, according to a first aspect of the present disclosure, there is provided an information processing system involving one or more multi-function printers, the information processing system including: a processor configured to: acquire reference data including target-specific information for a target organization and a skeleton procedure representing a template prepared in advance, the target-specific information comprising usage history of the one or more multifunction printers, wherein the target-specific information is information about the target organization; input the target-specific information and the skeleton script into a machine learning model; and perform an inference process by the machine learning model based on the target-specific information and the skeleton procedure and generate a document comprising a customized procedure for the target organization for use of the one or more multi-function printers.

According to a second aspect of the present disclosure, in the information processing system according to the first aspect, the reference data may include data of numerical values of one or more items specific to the target organization.

According to a third aspect of the present disclosure, in the information processing system according to the second aspect, the customized procedure may include an explanation based on the value indicated by the numeral .

According to a fourth aspect of the present disclosure, in the information processing system according to the second or third aspect, the one or more items may include at least one of a usage status of the one or more multi-function printers by the target organization, elapsed years since installation of the one or more multi-function printers, a number of employees, a company size, or business performance.

According to a fifth aspect of the present disclosure, in the information processing system according to any one of the second to fourth aspects, the customized procedure may include an explanation based on the data of the numerical values of the one or more items .

According to a sixth aspect of the present disclosure, in the information processing system according to any one of the first to fifth aspects, the reference data may include industry information acquired from a web or a database, and the customized procedure may include an explanation based on the industry information related to the target organization.

According to a seventh aspect of the present disclosure, in the information processing system according to any one of the first to sixth aspects, the reference data may include information on a certified company, which is acquired from a web or a database, and the customized procedure may include an explanation based on a certification held by the target organization.

According to an eighth aspect of the present disclosure, in the information processing system according to any one of the first to seventh aspects, the reference data may include information related to a product, and the customized procedure may include an explanation regarding information on the product.

According to a ninth aspect of the present disclosure, in the information processing system according to the eighth aspect, the customized procedure may include an explanation regarding an advantage of the product.

According to a tenth aspect of the present disclosure, in the information processing system according to any one of the first to ninth aspects, the machine learning model may be a large-scale language model.

According to an eleventh aspect of the present disclosure, in the information processing system according to the tenth aspect, the processor may be configured to: input, to the large-scale language model, the target-specific information and the skeleton script and a prompt for giving an instruction to generate the customized procedure.

According to a twelfth aspect of the present disclosure, in the information processing system according to the first aspect, the document may be a script for a scenario for the target organization.

According to a thirteenth aspect of the present disclosure, there is provided an information processing program causing a computer to execute a process for generating a procedure involving one or more multi-function printers, the process including: acquiring reference data including target-specific information and for a target organization and a skeleton procedure representing a template prepared in advance, the target-specific information comprising usage history of the one or more multifunction printers, wherein the target-specific information is information about the target organization; inputting the target-specific information and the skeleton script into a machine learning model; and performing an inference process by the machine learning model based on the target-specific information and the skeleton procedure and generate a document comprising a customized procedure for the target organization for use of the one or more multi-function printers.

According to a fourteenth aspect of the present disclosure, there is provided an information processing system that generates a scenario for sales personnel to approach a customer, the information processing system comprising: a processor configured to: acquire reference data including target-specific information for a target organization and a skeleton procedure representing a template prepared in advance, wherein the target-specific information is information about the target organization; input the target-specific information and the skeleton script into a machine learning model; and perform an inference process by the machine learning model based on the target-specific information and the skeleton procedure and generate a document comprising a customized procedure for the target organization for introduction of a product or a service.

According to the first aspect of the present disclosure, it is possible to generate a customized procedure that efficiently supports sales by taking into account information specific to a target organization.

According to the second aspect of the present disclosure, it is possible to generate a customized procedure including the basis based on the numerical values of one or more items specific to the target organization.

According to the third aspect of the present disclosure, it is possible to generate a customized procedure including the explanation based on the numerical values of one or more items specific to the target organization.

According to the fourth aspect of the present disclosure, it is possible to generate a customized procedure including the basis based on at least one of the usage status of the one or more multi-function printers, the elapsed years since the installation of the one or more multi-function printers, the number of employees, the company size, or the business performance.

According to the fifth aspect of the present disclosure, it is possible to generate a customized procedure including the explanation based on the data of the numerical values of the one or more items.

According to the sixth aspect of the present disclosure, it is possible to generate a customized procedure including the explanation based on the industry information related to the target organization.

According to the seventh aspect of the present disclosure, it is possible to generate a customized procedure including the explanation based on the certification held by the target organization.

According to the eighth aspect of the present disclosure, it is possible to generate a customized procedure including the explanation regarding the information on the product corresponding to the basis based on the target-specific information.

According to the ninth aspect of the present disclosure, it is possible to generate a customized procedure including the explanation regarding the advantage of the product corresponding to the basis based on the target-specific information.

According to the tenth aspect of the present disclosure, it is possible to generate a customized procedure including information specific to a target organization as a basis by using the large-scale language model.

According to the eleventh aspect of the present disclosure, it is possible to generate a customized procedure including information specific to a target organization as a basis based on the prompt for giving an instruction to the large-scale language model.

According to the twelfth aspect of the present disclosure, it is possible to generate a script for a scenario for the target organization.

According to the thirteenth aspect of the present disclosure, it is possible to generate a customized procedure that efficiently supports sales by taking into account information specific to a target organization.

According to the fourteenth aspect of the present disclosure, it is possible to generate a customized procedure that efficiently supports sales by taking into account information specific to a target organization.

### BRIEF DESCRIPTION OF THE DRAWINGS

Exemplary embodiment(s) of the present invention will be described in detail based on the following figures, wherein:
FIG. 1 is a diagram showing a schematic configuration of an information processing system according to the present exemplary embodiment;
FIG. 2 is a block diagram showing a major configuration of an electrical system of a server and a user terminal in the information processing system according to the present exemplary embodiment;
FIG. 3 is a functional block diagram showing a functional configuration of the server in the information processing system according to the present exemplary embodiment; and
FIG. 4 is a flowchart showing an example of a flow of a generation process performed by the server of the information processing system according to the present exemplary embodiment.

### DETAILED DESCRIPTION OF THE INVENTION

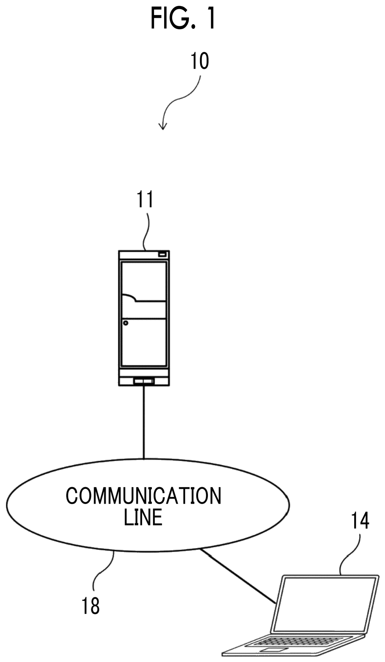

Hereinafter, an example of the present exemplary embodiment will be described in detail with reference to the drawings. In the present exemplary embodiment, an information processing system in which a user terminal, a server, and the like are connected to each other via a communication line, such as various networks, will be described as an example. FIG. 1 is a diagram showing a schematic configuration of an information processing system 10 according to the present exemplary embodiment.

As shown in FIG. 1, the information processing system 10 according to the present exemplary embodiment includes a server 11, a user terminal 14, and the like. The server 11 and the user terminal 14 are connected to each other via a communication line 18 such as a local area network (LAN), a wide area network (WAN), the Internet, or an intranet. Then, the server 11 and the user terminal 14 can transmit and receive various data to and from each other via the communication line 18.

In FIG. 1, although one server 11 and one user terminal 14 are illustrated, either or both of the server 11 and the user terminal 14 may be plural in number.

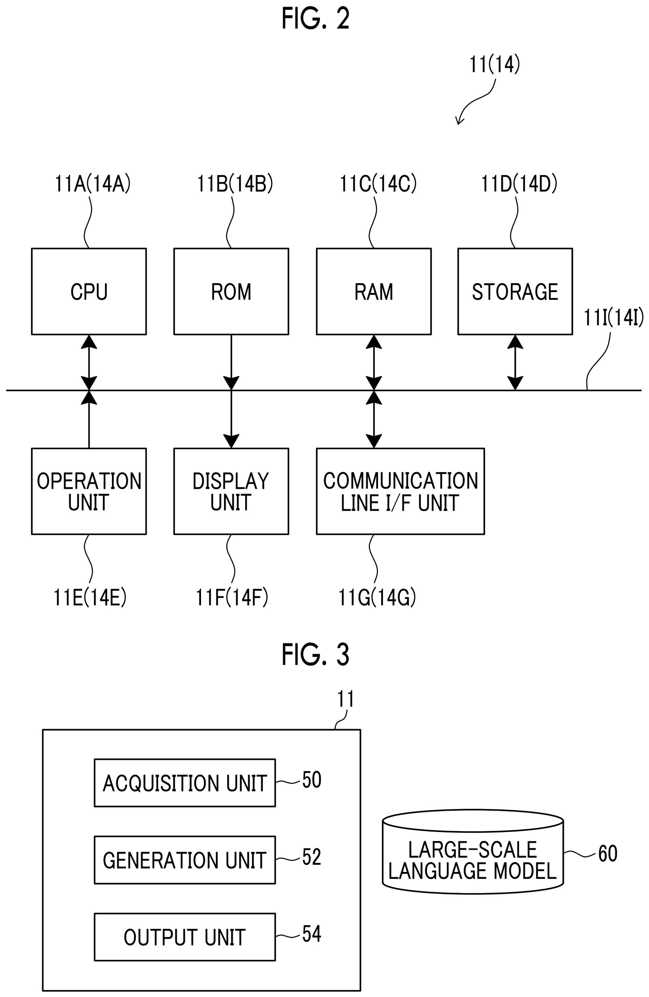

Subsequently, a major configuration of an electrical system of the server 11 and the user terminal 14 according to the present exemplary embodiment will be described. FIG. 2 is a block diagram showing the major configuration of the electrical system of the server 11 and the user terminal 14 in the information processing system 10 according to the present exemplary embodiment. Since the server 11 and the user terminal 14 have a similar configuration, the server 11 will be described below as a representative.

As shown in FIG. 2, the server 11 according to the present exemplary embodiment includes a central processing unit (CPU) 11A as an example of a processor, a read only memory (ROM) 11B, a random access memory (RAM) 11C, a storage 11D, an operation unit 11E, a display unit 11F, and a communication line interface (I/F) unit 11G. The CPU 11A controls the overall operation of the server 11. The ROM 11B stores various control programs, various parameters, and the like in advance. The RAM 11C is used as a work area or the like in a case where various programs are executed by the CPU 11A. The storage 11D stores various data, application programs, and the like. The operation unit 11E is used to input various types of information. The display unit 11F is used to display the various types of information. The communication line I/F unit 11G is connected to the communication line 18 and transmits and receives various data to and from other apparatuses connected to the communication line 18. In addition, the communication line I/F unit 11G may be configured to be capable of directly communicating with each equipment by using various well-known wireless communications. The respective parts of the server 11 are electrically connected by a system bus 11I. In the server 11 according to the present exemplary embodiment, the storage 11D is applied as a storage unit, but, as an example of the storage, a non-volatile storage unit, such as a hard disk drive (HDD) or a flash memory, is applied.

With such a configuration, in the server 11 according to the present exemplary embodiment, the CPU 11A performs access to the ROM 11B, the RAM 11C, and the storage 11D, acquisition of various data via the operation unit 11E, and display of various types of information on the display unit 11F. In addition, in the server 11, the CPU 11A executes control of transmitting and receiving communication data via the communication line I/F unit 11G.

Next, a functional configuration of the server 11 will be described. FIG. 3 is a block diagram showing an example of a functional configuration of the server 11.
According to an embodiment, the server 11 may be configured to generate a procedure involving one or more device, such as multi-function printers. However, the disclosure is not limited thereto, and as such, the server 11 may be configured to generate other procedures. For example, the server 11 may include a processor configured to acquire reference data including target-specific information for a target organization and a skeleton procedure representing a template prepared in advance. The target-specific information includes usage history of the one or more devices, e.g., multifunction printers, wherein the target-specific information is information about the target organization. The target-specific information and the skeleton script are input into a machine learning model, which performs an inference process by the machine learning model based on the target-specific information and the skeleton procedure. The model generates a document including a script for a scenario that can be considered a customized procedure for the target organization for use of the one or more devices, e.g., multi-function printers.

FIG. 3 illustrates an example embodiment, in which, the server 11 functionally includes an acquisition unit 50, a generation unit 52, and an output unit 54.

The acquisition unit 50 acquires reference data including customer-specific information and information related to a process to follow, such as a sales scenario. For example, the customer-specific information may be the target-specific information.

The customer-specific information may include data of numerical values of one or more items specific to a customer. The items include at least any of a usage status of equipment by the customer, elapsed years since installation of the equipment, or an attribute of the customer. The attribute of the customer includes information related to the workforce size (for example, the number of employees), information related to the company size, or information related to the business performance. The usage status of the equipment is acquired, for example, via a monitoring service of the equipment.

In addition, the customer-specific information may include industry information to which the customer belongs, which is acquired from a web or a database (not shown).

In addition, the customer-specific information includes information on a certified company, which is acquired from a web or a database.

In addition, the customer-specific information includes investor relations (IR) information acquired from a web or a database.

In addition, the customer-specific information includes similar cases, which are sales cases conducted for a customer similar to the customer in question. The similar case is, for example, a compilation of past sales cases, such as a case in which a proposal has succeeded for a customer similar to the customer in question among the managed sales cases.

The customer-specific information may be automatically collected or may be manually registered. The customer-specific information is registered in a database (not shown), and the customer-specific information is acquired from the database for a customer designated by a user.

Examples of the customer-specific information to be acquired will be shown below.
"Customer name": "XXXX"
"Elapsed years since installation of equipment": 60
"Elapsed months since installation of equipment": "60 to 71 months since installation"
"Industry sector": "Sales"
"Industry subsector": "Automobile sales industry"
"Industry segment": "Automobile dealership industry"
"Workforce size": "500 to 999 people"
"Industry trend": (industry trend description in natural language)
"IR information": (IR information in natural language)
"Certification status": 0
"The number of copies/quarter": "133"
"The number of prints/quarter": "10343"
"The number of scans/quarter: "6132"
"The number of fax receptions/quarter": "0"
"The number of fax transmissions /quarter": "0"
"Similar case": XXX (URL to specific case), YYY (URL to specific case)

The "(industry trend description in natural language)" is an industry trend description written in natural language. An example of the industry trend description will be shown below.

"With the spread of digitalization and cloud services, the multifunction printer industry is seeing a shift from commercial equipment to software solutions. In addition, energy-saving and recycling features are emphasized due to environmental considerations, and the increase in remote work has created a demand for mobile printing and enhanced security features...."

"(IR information in natural language)" is IR information written in natural language. An example of the IR information will be described below.

"XXXX Corporation achieved record-breaking sales and profits in fiscal year 2023, and is aiming to increase sales by 15% in fiscal year 2024, with plans to expand particularly in the Asian market. We will strive for sustainable revenue growth through further product development and strengthened marketing strategies...."

The information related to process, such as a sales scenario, includes a skeleton scenario representing a template of the process. The skeleton scenario includes information related to a product. The skeleton scenario is prepared in advance.

The generation unit 52 generates a process, such as a sales scenario, for the designated customer based on the acquired reference data and a large-scale language model 60, the sales scenario including the customer-specific information as a basis.

Specifically, the generation unit 52 inputs, to the large-scale language model 60, the customer-specific information and the skeleton scenario acquired as the reference data and a prompt for giving an instruction to generate the sales scenario for the designated customer, the sales scenario including the customer-specific information as a basis, and generates the sales scenario.

The basis included in the sales scenario is a numeral that indicates a value based on data of a numerical value of at least one of the items. The generated sales scenario may include an explanation based on the data of the numerical values of the items. In addition, the generated sales scenario may include an explanation based on the value indicated by the numeral. For example, a sentence such as "this company utilizes the scan function of the multifunction printer to scan 6,132 sheets per month, which shows that scanning is a daily occurrence" is included in the sales scenario.

The generated sales scenario may include an explanation based on the industry information to which the designated customer belongs. For example, an explanatory sentence such as "the automobile dealership industry is seeing an increasing adoption of customer management and marketing automation, so the digitalization of business card management is in line with this industry trend" is included in the sales scenario.

The generated sales scenario may include an explanation based on a certification held by the designated customer. For example, a sentence such as "this company has obtained ISO XXX certification, and the introduction of the refurbished machine matches the company's environmental policy" is included in the sales scenario.

The generated sales scenario may include an explanation regarding information on a product corresponding to at least one basis. Specifically, the generated sales scenario may include an explanation regarding an advantage of the product corresponding to at least one basis. For example, a sentence such as "by utilizing this scan function, it is possible to point out that the digitization of the business cards can be smoothly advanced" is included in the sales scenario.

As described above, by inputting the prompt written in natural language and the skeleton scenario to the large-scale language model 60, a sales scenario to be used by sales is output. By combining the skeleton scenario with the customer-specific information, it is possible to output a sales scenario that conforms to the skeleton scenario and includes the customer-specific information.

The skeleton scenario may be attached as a file in a case of providing an instruction to the large-scale language model 60, or may be added to be included in a prompt written in natural language.

The prompt includes a role, a purpose, and precautions. The precautions include points related to the skeleton scenario.

The large-scale language model 60 is stored in, for example, a server separate from the server 11. The large-scale language model 60 is so-called generative artificial intelligence (AI). Examples of the large-scale language model include generative AI such as ChatGPT (registered trademark) (Internet search <URL: https://openai.com/blog/chatgpt>) or Gemini (registered trademark) (Internet search <URL: https://gemini.google.com/?hl=ja>). The large-scale language model 60 is obtained by training a neural network through deep learning. A prompt including an instruction is input to the large-scale language model 60, and inference data, such as text data indicating text and image data indicating an image, is also input. The large-scale language model 60 infers the input inference data according to the instruction indicated by the prompt and outputs an inference result in a data format such as audio data and text data. Here, the inference is, for example, analysis, classification, prediction, and/or summarization. The language model in the present invention is not limited to the large-scale language model, and includes a large multimodal model (LMM), a small scale language model (SLM) such as Phi, and the like. The large-scale language model 60 is an example of a learning model.

The output unit 54 transmits the generated scenario, such as a sales scenario to the user terminal 14.

Next, an action of the information processing system 10 will be described.

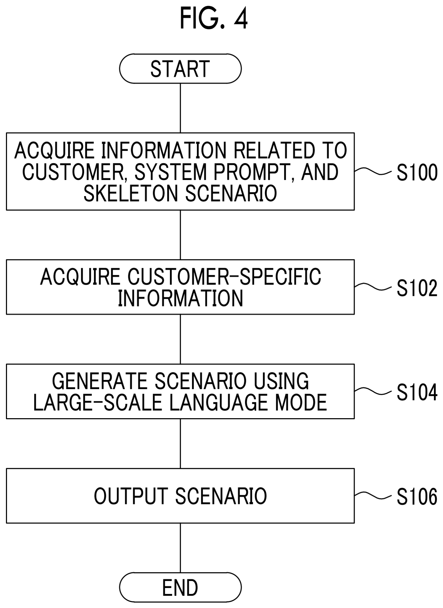

First, in the server 11, the CPU 11A reads out a summary program from the ROM 11B or the storage 11D, loads the summary program into the RAM 11C, and executes the summary program, so that a generation process shown in FIG. 4 is performed. Here, it is assumed that information related to the designated customer is input from the user terminal 14.

In step S100, the CPU 11A functions as the acquisition unit 50 to acquire the input information related to the customer and the prepared prompt and skeleton scenario.

In step S102, the CPU 11A functions as the acquisition unit 50 to acquire the customer-specific information for the designated customer based on the input information related to the customer.

In step S104, the CPU 11A functions as the generation unit 52 to input the acquired customer-specific information, skeleton scenario, and prompt to the large-scale language model 60 and to generate a script for a scenario.

In step S106, the CPU 11A functions as the output unit 54 to transmit the generated script for the scenario to the user terminal 14, and ends the generation process.

### <Example 1>

An example in which a scenario is generated for a customer A will be described.

An example of the prompt will be shown below.

### # Role

You are a professional in creating a proposal scenario for customers who support sales activities of companies.

Analyze the provided documents, and, drawing on the information of the customer, the industry trend, the obtained certification (for example, ISO xxxx), the usage status of the multifunction printer of the customer, the case of the company similar to the customer, and the like, create a scenario that incorporates a logical and customer-specific basis.

### # Purpose

Introduction of products or services to be handled is proposed based on the issues of the customer.

### # Precautions

- In a case where the customer has not obtained any certifications, do not mention it in the scenario.
- Do not omit the name of the product included in the skeleton scenario.
- Be sure to include industry trends or company information as a basis in the scenario.
- Do not change the skeleton of the scenario.

An example of the skeleton scenario will be shown below.

Propose Service A, as this company has not yet signed a contract for Service A. Note that, in a case of a company that manages business cards on an individual basis, contact-network information cannot be shared appropriately across the organization, which can lead to reduced sales efficiency for customer responsiveness and business negotiation acquisition. Service A provides functions required for a business card management service for a corporation, and also makes it easy to register business cards using the scan function of the multifunction printer. Therefore, point out that using Service A enables smooth sharing and utilization of contact-network information along with the digitization of the business cards.

An example of the scenario generated for the customer A will be shown below.

Consider a proposal to utilize Service A. This company uses the scan function of the multifunction printer to scan 6,132 sheets per month, which shows that scanning is a daily occurrence. By utilizing this scan function, it is possible to point out that the digitization of the business cards can be smoothly advanced. In addition, as the company is mid-sized in terms of workforce size, it is likely that business cards are managed on an individual basis, and, in a case where contact-network information is not shared appropriately across the organization, it may adversely affect sales efficiency and customer responsiveness. Service A is a business card management service for a corporation that makes it easy to digitize and share business card information, and is expected to improve the efficiency of sales activities and increase opportunities for business negotiation acquisition. Furthermore, the automobile dealership industry is seeing an increasing adoption of customer management and marketing automation, so the digitalization of business card management is in line with this industry trend.

Since the skeleton scenario mentions the number of scans, it can be seen that, by simply entering the prompt above, the data of the number of scans is extracted as relevant customer-specific information and included in the generated scenario. Furthermore, it can be seen that customer-specific information such as the number of scans per month is included in the sales scenario. In addition, it can be seen that information indicating that the company is mid-sized in terms of workforce size is included in the generated scenario. In addition, it can be seen that information related to the value provided by Service A to the customer (such as "it is expected to improve the efficiency of sales activities and increase opportunities for business negotiation acquisition") is included in the generated scenario, based on the description of the advantages of Service A included in the skeleton scenario (such as "business cards can be easily registered using the scan function of the multifunction printer").

### <Example 2>

Next, an example in which a scenario is generated for a plurality of customers will be described.

Examples of the prompt and the skeleton scenario are the same as the examples in Example 1.

An example of a scenario generated for a customer B for which the actual use record of the multifunction printer is not registered will be shown below.

Make a proposal to utilize Service A. In the metal product manufacturing industry, in a situation where global competition is intensifying and efficiency is required, improving the efficiency of sales activities is a major issue. In a company having a scale of 10,000 or more employees, in a case where business cards are managed on an individual basis, there is a possibility that the contact-network information is not shared appropriately across the organization, which can lead to reduced sales efficiency for customer responsiveness and business negotiation acquisition. Service A provides functions required for a business card management service for a corporation, and it is possible to easily register business cards by using the scan function of the multifunction printer. As a result, the digitization of the business cards and the smooth sharing and utilization of the contact-network information are promoted, and the improvement in the efficiency of the sales activities is supported. Furthermore, since digital transformation (DX) is progressing as an industry trend, it will be an attractive proposal even for companies with a high awareness of IT investment.

An example of a scenario generated for another customer C for which the actual use record of the multifunction printer is not registered will be shown below.

Make a proposal to utilize Service A. Currently, since the actual use record of the multifunction printer is unknown, a proposal for improving operations through the improvement in the efficiency of business card management is effective. In a case of a company that manages business cards on an individual basis, contact-network information cannot be shared appropriately across the organization, which can lead to reduced sales efficiency for customer responsiveness and business negotiation acquisition. Service A provides functions required for a business card management service for a corporation, and it is possible to easily register business cards by using the scan function of the multifunction printer. As a result, it is possible to promote the digitization of the business cards and the smooth sharing and utilization of the contact-network information, thereby aiming to improve business efficiency. As an industry trend, religious and political organizations are increasingly introducing data management systems, with an emphasis on efficiency and security measures. In view of this background, it is possible to provide value in line with the trend of the industry by proposing the digitization of business card management.

An example of a scenario generated for a customer D for which the actual use record of the multifunction printer is registered will be shown below.

Consider a proposal to utilize Service A. Currently, the usage status of the multifunction printer has been confirmed to be at a certain level, with the number of copies of 37,683, the number of prints of 367, the number of fax receptions of 4,482, and the number of fax transmissions of 2,757. Based on these usage statuses, it is expected that utilizing the scan function of the multifunction printer improves the efficiency of business card management. Service A is a business card management service for a corporation that makes it easy to digitize business cards and streamlines the registration process by utilizing the scan function. In addition, as an industry trend, administrative agencies are promoting digitization and data utilization, and efficient business operations are required. In view of such a background, it is recommended to make a proposal to promote the sharing of the contact-network information across the organization through the digitization of business card management and to aim at improving the efficiency of customer responsiveness and business negotiation acquisition.

It can be seen that the generated scenario changes depending on whether or not the use record of the multifunction printer is registered as the customer-specific information. In addition, in each generated scenario, it can be seen that information related to the value provided by Service A to the customer (such as "the digitization of the business cards and the smooth sharing and utilization of the contact-network information are promoted, and the improvement in the efficiency of the sales activities is supported", "it is possible to promote the digitization of the business cards and the smooth sharing and utilization of the contact-network information, thereby aiming to improve business efficiency", and "the registration process is streamlined by utilizing the scan function") is included in the scenario, based on the description of the advantages of Service A included in the skeleton scenario (such as "business cards can be easily registered using the scan function of the multifunction printer").

### <Example 3>

Next, an example in which a scenario is generated for a customer will be described.

An example of the prompt is the same as in Example 1.

An example of the skeleton scenario will be shown below.

Propose a paperless fax function alongside the replacement multifunction printer, since the volume of faxes received is low with 99 pages or less per month. Note that a customer whose inbound fax volume is minimal may still have standalone fax machines (transmitting and receiving equipment of fax) in place. Point out, while conducting a hearing on those circumstances, that the multifunction printer allows convenient fax transmission and reception, and that inbound faxes can be processed paperlessly without printing.

An example of the scenario generated for a customer E will be shown below.

It has been confirmed that the customer receives five fax pages per month and the frequency of use is limited. In such a situation, proposing the introduction of paperless fax function is expected to improve business efficiency and cost effectiveness. By utilizing the paperless fax function, the received fax can be managed as digital data without being output to paper, so that it is possible to reduce paper resources and to improve the efficiency of storage space. In addition, as an industry trend, medical institutions are promoting digital transformation (DX), and there is a demand for improving business efficiency utilizing IT. Accordingly, it is considered that the effort for paperless is highly compatible with the management policy of the customer. Furthermore, according to the IR information, the customer is focusing on the provision of advanced medical care and the development of regional medical care, and aims to provide new value by utilizing digital technology. In view of these backgrounds, the introduction of the paperless fax function will be a beneficial proposal in terms of both improving business efficiency and reducing environmental load.

It can be seen that, since the skeleton scenario includes an explanation based on the volume of faxes received, the sales scenario is generated by replacing that explanation with the volume of faxes received extracted as the information unique to the customer E. In addition, it can be seen that information related to the value provided by the paperless fax function to the customer ("it is possible to reduce paper resources and to improve the efficiency of storage space") is included in the generated scenario, based on the description of the advantages of the paperless fax function included in the skeleton scenario ("the multifunction printer allows convenient fax transmission and reception", "inbound faxes can be processed paperlessly without printing", or the like).

By performing the processing in this way, it is possible to generate a scenario that efficiently supports sales by taking into account information specific to a target customer.

### <Modification Example>

The present invention is not limited to the above-described exemplary embodiment, and various modifications and applications are possible without departing from the gist of the present invention.

In the exemplary embodiments, the processes are performed by a computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

In addition, the "system" in the present exemplary embodiment is described as an example of a system configured to include a plurality of apparatus, but may be configured to include a single apparatus having functions of some parts of the plurality of apparatus.

The processes performed by the server 11 according to the above exemplary embodiment may be processes performed by software, processes performed by hardware, or a combination of both. In addition, the processes performed by the server 11 may be stored in a storage medium as a program and distributed. In addition, the technology of the present disclosure may be applied to a program product.

In addition, the present disclosure is not limited to the above description, and various modifications other than the above description may be made without departing from the gist thereof.

Regarding the above exemplary embodiments, the following supplementary notes will be further disclosed.
(((1))) An information processing system involving one or more multi-function printers, the information processing system comprising:
   a processor configured to:
   acquire reference data including target-specific information for a target organization and a skeleton procedure representing a template prepared in advance, the target-specific information comprising usage history of the one or more multifunction printers, wherein the target-specific information is information about the target organization;
   input the target-specific information and the skeleton script into a machine learning model; and
   perform an inference process by the machine learning model based on the target-specific information and the skeleton procedure and generate a document comprising a customized procedure for the target organization for use of the one or more multi-function printers.
(((2))) The information processing system according to (((1))),
   wherein the reference data includes data of numerical values of one or more items specific to the target organization.
(((3))) The information processing system according to (((2))),
   wherein the customized procedure includes an explanation based on the value indicated by the numeral.
(((4))) The information processing system according to (((2))) or (((3))),
   wherein the one or more items include at least one of a usage status of the one or more multi-function printers by the target organization, elapsed years since installation of the one or more multi-function printers, a number of employees, a company size, or business performance.
(((5))) The information processing system according to any one of (((2))) to (((4))),
   wherein the customized procedure includes an explanation based on the data of the numerical values of the one or more items.
(((6))) The information processing system according to any one of (((1))) to (((5))),
   wherein the reference data includes industry information acquired from a web or a database, and
   the customized procedure includes an explanation based on the industry information related to the target organization.
(((7))) The information processing system according to any one of (((1))) to (((6))),
   wherein the reference data includes information on a certified company, which is acquired from a web or a database, and
   the customized procedure includes an explanation based on a certification held by the target organization.
(((8))) The information processing system according to any one of (((1))) to (((7))),
   wherein the reference data includes information related to a product, and
   the customized procedure includes an explanation regarding information on the product.
(((9))) The information processing system according to (((8))),
   wherein the customized procedure includes an explanation regarding an advantage of the product.
(((10))) The information processing system according to any one of (((1))) to (((9))), wherein the machine learning model is a large-scale language model.
(((11))) The information processing system according to (((10))), wherein the processor is configured to:
   input, to the large-scale language model, the target-specific information and the skeleton script and a prompt for giving an instruction to generate the customized procedure.
(((12))) The information processing system according to (((1))), wherein the document is a script for a scenario for the target organization.
(((13))) An information processing program causing a computer to execute a process for generating a procedure involving one or more multi-function printers, the process comprising:
   acquiring reference data including target-specific information and for a target organization and a skeleton procedure representing a template prepared in advance, the target-specific information comprising usage history of the one or more multifunction printers, wherein the target-specific information is information about the target organization;
   inputting the target-specific information and the skeleton script into a machine learning model; and
   performing an inference process by the machine learning model based on the target-specific information and the skeleton procedure and generate a document comprising a customized procedure for the target organization for use of the one or more multi-function printers.
(((14))) An information processing system that generates a scenario for sales personnel to approach a customer, the information processing system comprising:
   a processor configured to:
   acquire reference data including target-specific information for a target organization and a skeleton procedure representing a template prepared in advance, wherein the target-specific information is information about the target organization;
   input the target-specific information and the skeleton script into a machine learning model; and
   perform an inference process by the machine learning model based on the target-specific information and the skeleton procedure and generate a document comprising a customized procedure for the target organization for introduction of a product or a service.

According to (((1))), it is possible to generate a customized procedure that efficiently supports sales by taking into account information specific to a target organization.

According to (((2))), it is possible to generate a customized procedure including the basis based on the numerical values of one or more items specific to the target organization.

According to (((3))), it is possible to generate a customized procedure including the explanation based on the numerical values of one or more items specific to the target organization.

According to (((4))), it is possible to generate a customized procedure including the basis based on at least one of the usage status of the one or more multi-function printers, the elapsed years since the installation of the one or more multi-function printers, the number of employees, the company size, or the business performance.

According to (((5))), it is possible to generate a customized procedure including the explanation based on the data of the numerical values of the one or more items.

According to (((6))), it is possible to generate a customized procedure including the explanation based on the industry information related to the target organization.

According to (((7))), it is possible to generate a customized procedure including the explanation based on the certification held by the target organization.

According to (((8))), it is possible to generate a customized procedure including the explanation regarding the information on the product corresponding to the basis based on the target-specific information.

According to (((9))), it is possible to generate a customized procedure including the explanation regarding the advantage of the product corresponding to the basis based on the target-specific information.

According to (((10))), it is possible to generate a customized procedure including information specific to a target organization as a basis by using the large-scale language model.

According to (((11))), it is possible to generate a customized procedure including information specific to a target organization as a basis based on the prompt for giving an instruction to the large-scale language model.

According to (((12))), it is possible to generate a script for a scenario for the target organization.

According to (((13))), it is possible to generate a customized procedure that efficiently supports sales by taking into account information specific to a target organization.

According to (((14))), it is possible to generate a customized procedure that efficiently supports sales by taking into account information specific to a target organization.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: information processing system
11: server
14: user terminal
50: acquisition unit
52: generation unit
54: output unit
60: large-scale language model

## Claims

1. An information processing system involving one or more multi-function printers, the information processing system comprising:
a processor configured to:
acquire reference data including target-specific information for a target organization and a skeleton procedure representing a template prepared in advance, the target-specific information comprising usage history of the one or more multifunction printers, wherein the target-specific information is information about the target organization;
input the target-specific information and the skeleton script into a machine learning model; and
perform an inference process by the machine learning model based on the target-specific information and the skeleton procedure and generate a document comprising a customized procedure for the target organization for use of the one or more multi-function printers.

2. The information processing system according to claim 1,
wherein the reference data includes data of numerical values of one or more items specific to the target organization.

3. The information processing system according to claim 2,
wherein the customized procedure includes an explanation based on the value indicated by the numeral.

4. The information processing system according to claim 2 or 3,
wherein the one or more items include at least one of a usage status of the one or more multi-function printers by the target organization, elapsed years since installation of the one or more multi-function printers, a number of employees, a company size, or business performance.

5. The information processing system according to any one of claims 2 to 4,
wherein the customized procedure includes an explanation based on the data of the numerical values of the one or more items.

6. The information processing system according to any one of claims 1 to 5,
wherein the reference data includes industry information acquired from a web or a database, and
the customized procedure includes an explanation based on the industry information related to the target organization.

7. The information processing system according to any one of claims 1 to 6,
wherein the reference data includes information on a certified company, which is acquired from a web or a database, and
the customized procedure includes an explanation based on a certification held by the target organization.

8. The information processing system according to any one of claims 1 to 7,
wherein the reference data includes information related to a product, and
the customized procedure includes an explanation regarding information on the product.

9. The information processing system according to claim 8,
wherein the customized procedure includes an explanation regarding an advantage of the product.

10. The information processing system according to any one of claims 1 to 9, wherein the machine learning model is a large-scale language model.

11. The information processing system according to claim 10, wherein the processor is configured to:
input, to the large-scale language model, the target-specific information and the skeleton script and a prompt for giving an instruction to generate the customized procedure.

12. The information processing system according to claim 1, wherein the document is a script for a scenario for the target organization.

13. An information processing program causing a computer to execute a process for generating a procedure involving one or more multi-function printers, the process comprising:
acquiring reference data including target-specific information and for a target organization and a skeleton procedure representing a template prepared in advance, the target-specific information comprising usage history of the one or more multifunction printers, wherein the target-specific information is information about the target organization;
inputting the target-specific information and the skeleton script into a machine learning model; and
performing an inference process by the machine learning model based on the target-specific information and the skeleton procedure and generate a document comprising a customized procedure for the target organization for use of the one or more multi-function printers.

14. An information processing system that generates a scenario for sales personnel to approach a customer, the information processing system comprising:
a processor configured to:
acquire reference data including target-specific information for a target organization and a skeleton procedure representing a template prepared in advance, wherein the target-specific information is information about the target organization;
input the target-specific information and the skeleton script into a machine learning model; and
perform an inference process by the machine learning model based on the target-specific information and the skeleton procedure and generate a document comprising a customized procedure for the target organization for introduction of a product or a service.
